# EUROPEAN PATENT SPECIFICATION

(11) **EP 0 356 216 B1**
(45) Date of publication and mention of the grant of the patent: **18.01.1995**
(21) Application number: 89308538.1
(22) Date of filing: 23.08.1989
(51) Int. Cl.: B23Q 7/14

(54) **Automatic pallet changer**
Automatischer Palettenwechsler
Changeur automatique de palette

(30) Priority: 23.08.1988 JP 209171/88
(43) Date of publication of application: 28.02.1990
(73) Proprietor: KABUSHIKI KAISHA MORI SEIKI SEISAKUSHO, Yamatokoriyamashi Nara (JP)
(72) Inventor: Teraoka, Masanobu, Tenrishi Nara (JP); Maeda, Norihide, Kashiharashi Nara (JP)
(74) Representative: Purvis, William Michael Cameron

(56) References cited:
- EP-A- 0 224 931
- DE-A- 3 541 600
- FR-A- 2 570 631
- FR-A- 2 584 640
- US-A- 4 797 990
- SOVIET INVENTIONS ILLUSTRATED DERWENT PUBL., P56, NR.J7632,E29,SEPT.1,1982 &SU-A-867604(KRAMA ENG TECH RES) 30.09.1981
- PATENT ABSTRACTS OF JAPAN vol. 10, no. 304 (M-526)(2360) 16 October 1986 & JP-A-61 117 045 ( TOYODA ) 4 June 1986
- PATENT ABSTRACTS OF JAPAN vol. 7, no. 283 (M-263)(1428) 16 December 1983 & JP-A-58 160 040 ( TOYODA ) 22 September 1983

## Description

The invention relates to an automatic pallet changer for loading and unloading a pallet to support a workpiece on a machine tool.

Previously proposed pallet changers of this kind have been provided with an exchanger arm located between the table of the machine and the pallet receiver where the pallets are exchanged. The exchanger arm is rotatable around a vertical supporting shaft and also movable up and down along the shaft.

A disadvantage of such pallet changers is that the pallet exchange takes a relatively long time. The slow speed of pallet exchange is due to the fact that the exchanger arms must be long enough to reach and engage the peripheral portion of the pallet. As a result the radius of the circular movement of the exchanger arms becomes large, and they are in danger of colliding with other objects such as rails and guides which are used to transport the pallet to a place where the pallets are exchanged. In addition, because of the larger circular movement the speed of the exchanger arms unavoidably reduces.

It is known from DE-A-3541600 to provide a pallet changer having short exchanger arms that engage pallets at points adjacent the respective exchanger arms. The pallets are exchanged by rotating the exchanger arms about a vertical axis to slide the pallets on circular guide surfaces through a 180° rotation.

Whilst the pallet changer of DE-A-3541600 probably operates more quickly than previously known changers, it is more expensive to manufacture because of the need for the guide surfaces. Moreover, machining chips can be deposited on the guide surfaces, leading to, e.g., wear and possible jamming of pallets on the guide surfaces.

According to the invention there is provided an automatic pallet changer, located between a pallet support for receiving a first pallet at one position of the pallet changer and a table for receiving a second pallet at the other position of the pallet changer, the pallet changer comprising: a pallet exchanger arm carried on a support shaft, so as to be rotatable about the axis thereof and movable up and down along said axis; driving means for effecting the rotation and the up and down movement of the exchanger arm; a clamp unit for clamping the second pallet on the table; and operating means for actuating the clamp unit, wherein the pallet exchanger arm has at each end thereof pallet engaging means engageble with each pallet, and engager blocks are formed at side portions of the pallets (P₁, P₂) respectively supported on the pallet support and the table, with the side portions facing one another so that the engager blocks are opposed to each other to thereby engage with the pallet engaging means respectively, characterized in that the pallet exchanger arm is constructed such that it raises and carries the pallets in a cantilevered manner when changing their positions.

Such a pallet changer can be capable of exchanging the pallets quickly and can be capable of moving in association with the pallet clamps on the machine table.

The invention is diagrammatically illustrated by way of example in the accompanying drawings, in which:-
Figure 1 is a plan view showing a machining centre incorporating an automatic pallet changer according to the invention;
Figure 2 is an enlarged plan view showing the pallet changer of Figure 1;
Figure 3 is a vertical cross-section taken on line 3-3 in Figure 2;
Figure 4 is a vertical cross-section taken on line 4-4 in Figure 2; and
Figure 5 is a cross-sectional plan view showing a portion of the pallet changer of Figure 1.

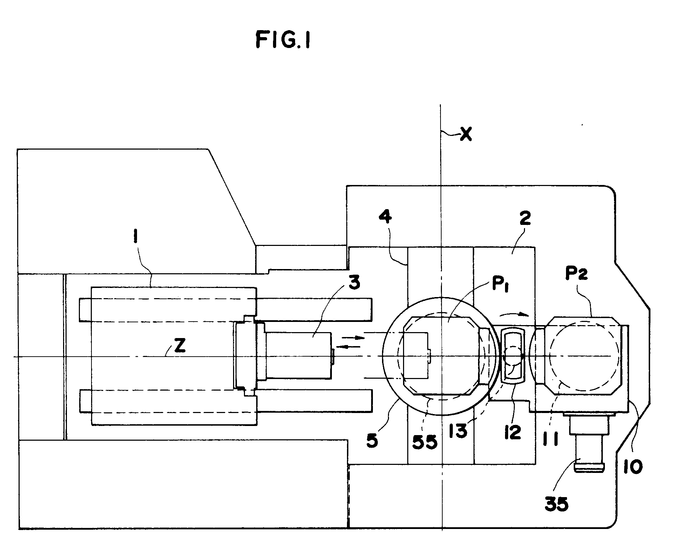

Referring to Figure 1, a pallet changer is mounted on a machining centre, hereinafter called the machine. The machine includes a body 1, a bed 2 and a main spindle 3 which is movable in the direction of an axis Z in the direction of the double arrow.

The machine includes a table 5 which is placed on the bed 2 and is movable along a guide rail 4 in the direction of an axis X. The table 5 includes a pallet clamping unit 55 whereby a pallet P₁ supporting a workpiece (not shown) can be clamped. The workpiece is to be machined by a tool (not shown) carried on the main spindle 3.

The pallet changer includes a body frame 10 disposed at the front of the bed 2. Above the body frame 10 there is provided a pallet support 11 in opposition to the table 5 and positioned at a place where the pallets are exchanged. An exchanger arm 12 is disposed between the table 5 and the pallet support 11 and is carried on a support shaft 13 such that the exchanger arm 12 rotates around the axis of the support shaft 13 and moves along the support shaft 13.

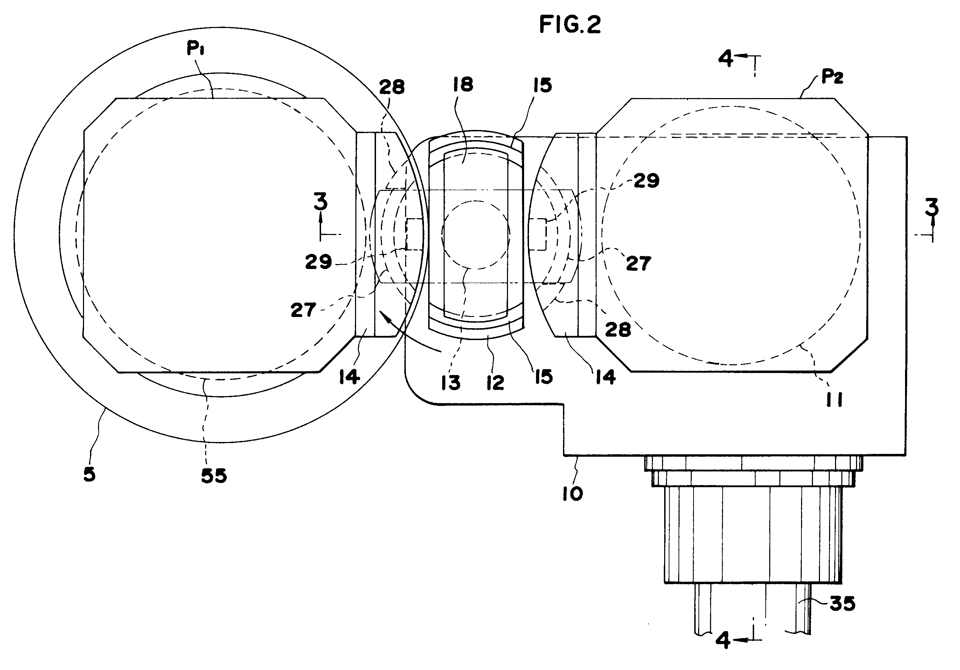

The pallet support 11, as shown in Figures 2 to 4, is disposed above the body frame 10, and receives a pallet P₂ mounting a workpiece transported from a pallet magazine or a pallet pool.

Each pallet P₁ and P₂ is provided with an engager block 14 engageable with the exchanger arm 12. The two pallets P₁ and P₂ are positioned such that the respective blocks 14 are opposed to each other.

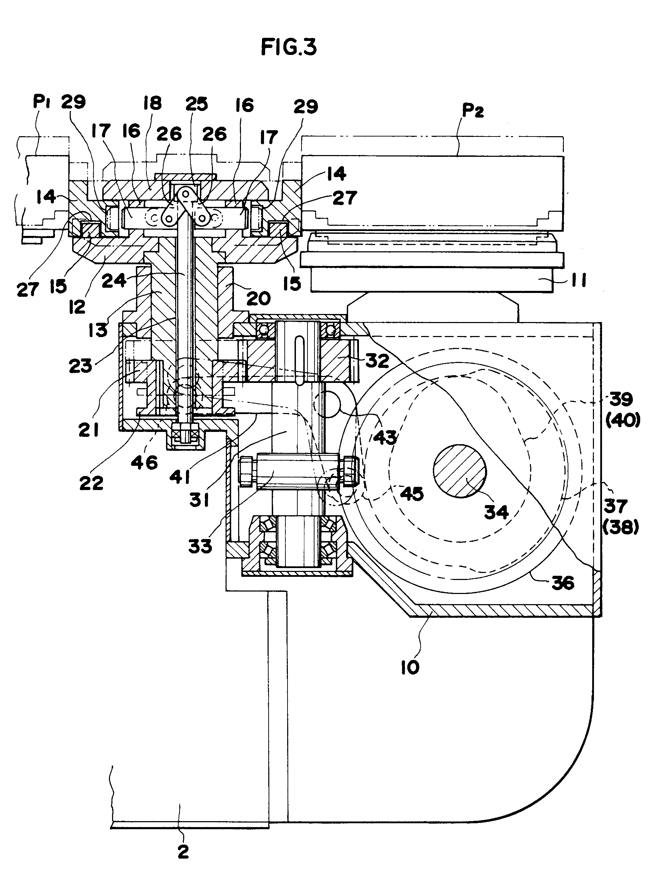

The exchanger arm 12, as shown in Figures 2 and 3, is made of a rectangular short plate having semi-circular ridges 15 formed concentrically with the support shaft 13 at opposite ends. The exchanger arm 12 is provided with horizontal slidable lock pins 17 guided through posts 16 upstanding on the exchanger arm. An upper plate 18 is secured to the posts 16.

The support shaft 13 is carried in a cylindrical boss 20 secured to the body frame 10 such that the shaft 13 can rotate and move in the direction of its length. As described above, at its upper end the support shaft 13 supports the exchanger arm 12 and it has transmission gears 21 and a wheel 22 at its lower end. In addition, the support shaft 13 is provided with an axial bore 23 in which a rod 24 to operate the lock pins 17 is freely accommodated . The rod 24 is rotatably connected to the body frame 10 at its lower end, extends upward and has its upper end 25 housed in a space in the upper plate 18 of the exchanger arm 12. The lock pins 17 are pivotally connected to the upper part 25 of the rod 24 through links 26. When the exchanger arm 12 moves upwardly, together with the support shaft 13, the lock pins 17 extend in the respective outward directions as shown by chain dotted lines in Figure 3, thereby locking the pallets P₁ and P₂.

Each engager block 14 is provided with a semi-circular groove 27 with which one of the engager ridges 15 of the exchanger arm 12 can be engaged, the groove 27 being provided with a stop 28 (Figure 2). Each block 14 is provided with a recess 29 to receive the lock pin 17.

The engager ridges 15 of the exchanger arm 12 fit in the circular grooves 27 of the block 14, thereby maintaining the pallets P₁ and P₂ on the respective sides of the exchanger arm 12. When the exchanger arm 12 rises up the lock pins 17 extend radially to engage in the recesses 29 and lock the pallets P₁ and P₂.

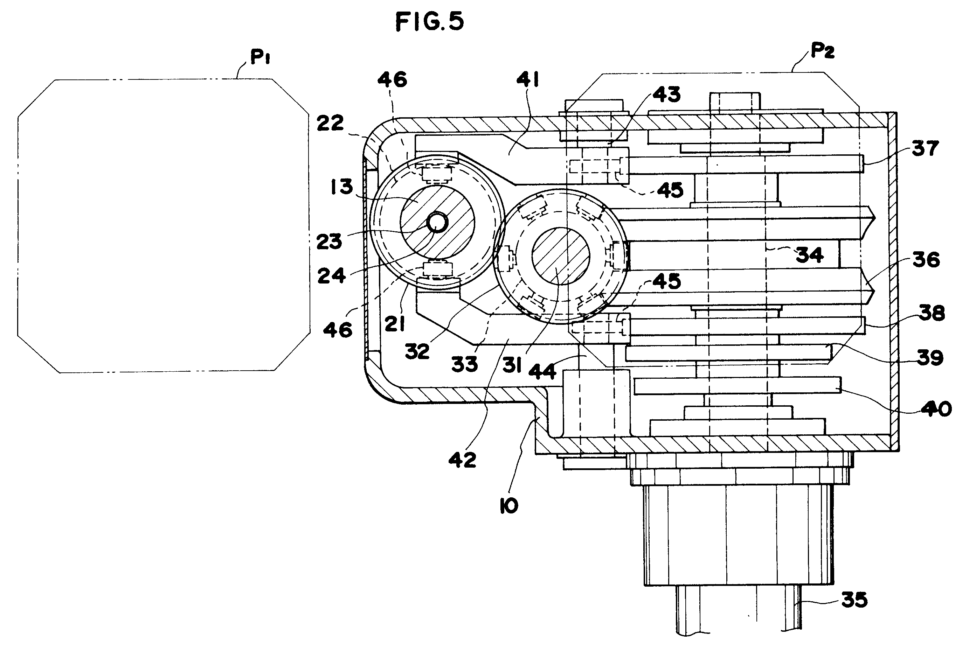

The shaft 13, which supports the exchanger arms 12, can be rotated and moved up and down by a driving unit which will be described with reference to Figures 3 to 5:

An intermediate transmission shaft 31 is rotatively mounted on the body structure 10 parallel with the shaft 13. The shaft 31 carries a gear 32 engageable with the gear 21, and a turret 33 of a cam unit. The turret 33 includes rollers radially arranged.

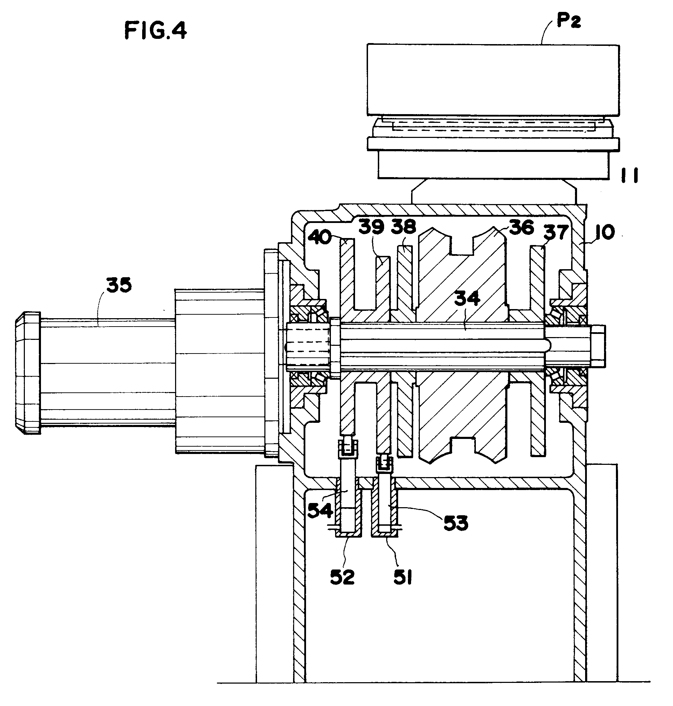

The body structure 10 carries a driving shaft 34, which is perpendicular to the intermediate transmission shaft 31. The driving shaft 34 is driven by a geared motor 35 and is equipped with a cam 36 of the cam unit, cam plates 37, 38 for moving the exchanger arm 12 up and down and two cam plates 39, 40 for driving hydraulic cylinders 51 and 52 (Figure 4) which release the pallet clamping unit 55 on the table 5.

Rocker arms 41 and 42 move in association with the cam plates 37 and 38 and are rotatively supported on pivots 43 and 44, respectively. The rocker arms 41 and 42 are each provided at one end with a cam follower 45 which are maintained in contact with the cam plates 37 and 38, respectively, and at the other end with a roller 46 which is maintained in contact with the wheel 22.

As shown in Figure 4, pistons 53 and 54, operated by the cam plates 39 and 40, act on fluid in the hydraulic cylinders 51 and 52, thereby enabling the fluid to enter the pallet clamping unit 55. The pistons 53 and 54 are operated synchronously with the operation of the clamp unit 55.

The pallet changer operates as follows:
The initial position at which the exchanger arm starts to operate is indicated by full lines in Figures 1 and 2. At this stage the driving shaft 34 is rotated. The turning moment is transmitted to the exchanger arm 12 through the intermediate transmission shaft 31, the gear 32, the gear 21 and the support shaft 13. The exchanger arm 12 is rotated through 90°, in the direction of the arrow shown in Figure 1, thereby enabling the engager ridges 15 thereof to engage in the grooves 27 of the engager blocks 14 and support the pallets P₁ and P₂.

The pistons 53 and 54 are operated by the cam plates 39 and 40 to push the fluid in the hydraulic cylinders 51 and 52 into the clamp unit 55 of the table 5, thereby releasing the pallet P₁ (unclamping).

The rocker arms 41 and 42 operated by the cam plates 37 and 38 raise the support shaft 13 through the wheel 22 to the position indicated by the dotted lines in Figure 3. At this stage the lock pins 17 extend outwardly and engage in the recesses 29, thereby locking the pallets P₁ and P₂. The exchanger arm 12, while rising in accordance with the ascent of the support shaft 13, raises the pallets P₁ and P₂ above the table 5 and the pallet support 11. While the pallets P₁ and P₂ are in the raised state, the exchanger arm 12 rotates through 180°, thereby changing over the positions of the pallets P₁ and P₂.

Then, the exchanger arm 12 descends to the position indicated by full lines in Figure 3, and places the pallet P₁ on the pallet support 11, and the pallet P₂ on the table 5. Due to the descent of the exchanger arm 12 the lock pins 17 are disengaged from the recesses 29, thereby unlocking the pallets P₁ and P₂.

Subsequently, the exchanger arm 12 rotates through 90° and returns to the starting position indicated by full lines in Figures 1 and 2. The pallet P₂ left on the table 5 is clamped by the clamp unit 55, and the workpiece placed thereon can be machined by a tool (not shown) on the spindle 3 of the machine. The fluid in the clamp unit 55 is forced back to the hydraulic cylinders 51 and 52. The procedure can be repeated.

## Claims

1. An automatic pallet changer, located between a pallet support (11) for receiving a first pallet at one position of the pallet changer and a table (5) for receiving a second pallet at the other position of the pallet changer, the pallet changer comprising: a pallet exchanger arm (12) carried on a support shaft (13), so as to be rotatable about the axis thereof and movable up and down along said axis; driving means for effecting the rotation and the up and down movement of the exchanger arm; a clamp unit (55) for clamping the second pallet on the table (5); and operating means for actuating the clamp unit (55), wherein the pallet exchanger arm (12) has at each end thereof pallet engaging means (15, 17) engageable with each pallet, and engager blocks (14, 14) are formed at side portions of the pallets (P₁, P₂) respectively supported on the pallet support (11) and the table (5), with the side portions facing one another so that the engager blocks (14, 14) are opposed to each other to thereby engage with the pallet engaging means (15, 17) respectively, characterized in that the pallet exchanger arm (12) is constructed such that it raises and carries the pallets (P₁, P₂) in a cantilevered manner when changing their positions.

2. An automatic pallet changer according to claim 1, characterized in that one of the pallet engaging means (15) of the pallet exchanger arm (12) is an engager ridge (15) formed in an arc of a circle concentric with the support shaft (13), with the other pallet engaging means (17) of said arm being a lock pin, wherein each engager block (14) comprises an arcuate groove (27) to receive the engager ridge (15) and a recess (29) to receive the lock pin (17).

3. An automatic pallet changer according to claim 1 or claim 2, wherein the driving means (34-40) and the operating means are operable in association with each other.

4. An automatic pallet changer according to claim 3, wherein the driving means (34-40) and the operating means are operable in association with each other through a hydraulic system (51, 52).

## Patentansprüche

1. Automatischer Palettenwechsler, welcher zwischen einem Palettenträger (11) für die Aufnahme einer ersten Palette in einer ersten Position des Palettenwechslers und einem Tisch (5) für die Aufnahme einer zweiten Paletten in der anderen Position des Palettenwechslers angeordnet ist, wobei der Palettenwechsler aufweist:
Einen Palettenwechselarm (12), der an einer Trägerwelle (13) gelagert ist, so daß er um deren Achse drehbar und entlang dieser Achse auf- und abbewegbar ist, Antriebseinrichtungen, um die Drehung und die Auf- und Abbewegung des Wechselarmes zu bewirken, eine Klemmeinheit (55) für das Festklammern der zweiten Palette an dem Tisch (5), und Betätigungseinrichtungen für die Betätigung der Klemmeinheit (55), wobei der Palettenwechselarm (12) an jedem seiner Enden Paletteneingriffseinrichtungen (15, 17) hat, die jeweils mit einer Palette in Eingriff bringbar sind, und wobei Eingriffsblöcke (14, 14) an den Seitenabschnitten der jeweiligen Paletten (P₁, P₂) ausgebildet sind, welche auf dem Palettenträger (11) und dem Tisch (5) getragen werden, wobei die Seitenabschnitte einander zugewandt sind, so daß die Eingriffsblöcke (14, 14) einander gegenüberliegen, so daß sie so mit den jeweiligen Paletteneingriffseinrichtungen (15, 17) in Eingriff treten, **darduch gekennzeichnet**, daß der Palettenwechselarm (12) so aufgebaut ist, daß er die Paletten (P₁, P₂) nach Art eines Auslegers (freitragend) anhebt und trägt, wenn er die Positionen der Paletten wechselt.

2. Automatischer Palettenwechsler nach Anspruch 1, **dadurch gekennzeichnet**, daß eine der Paletteneingriffseinrichtungen (15) des Palettenwechselarmes (12) eine Eingriffsrippe (15) ist, die entlang eines Kreisbogens ausgebildet ist, der zu der Trägerwelle (13) konzentrisch liegt, während die andere Paletteneingriffseinrichtung (17) des Armes ein Verriegelungsstift ist, wobei jeder Eingriffsblock (14) eine bogenförmige Nut (27) für die Aufnahme der Eingriffsrippe (15) und eine Aussparung (29) für die Aufnahme des Verriegelungsstiftes (17) aufweist.

3. Automatischer Palettenwechsler nach Anspruch 1 oder 2, wobei die Antriebseinrichtung (34-40) und die Betätigungseinrichtung in Verknüpfung miteinander betreibbar sind.

4. Automatischer Palettenwechsler nach Anspruch 3, wobei die Antriebseinrichtung (34-40) und die Betätigungseinrichtung über ein hydraulisches System (51, 52) in Verbindung miteinander betreibbar sind.

## Revendications

1. Changeur automatique de palette, situé entre un support de palette (11) pour recevoir une première palette à une position du changeur de palette et une table (5) pour recevoir une seconde palette à l'autre position du changeur de palette, le changeur de palette comprenant : un bras échangeur de palette (12) supporté sur un arbre de support (13), afin de pouvoir tourner autour de l'axe de celui-ci et être mobile verticalement le long dudit axe; des moyens d'entraînement pour la rotation et le déplacement vertical du bras échangeur; une unité de serrage (55) pour fixer la seconde palette sur la table (5); et des moyens d'actionnement pour commander l'unité de serrage (55), dans lequel le bras échangeur de palette (12) comporte à chacune de ses extrémités des moyens d'engagement de palette (15, 17) pouvant être engagés avec chaque palette, et des blocs d'engagement (14, 14) sont formés aux portions latérales des palettes (P₁, P₂) respectivement supportées sur le support de palette (11) et la table (5), avec les portions latérales se faisant face de manière que les blocs d'engagement (14, 14) soient opposés pour s'engager avec les moyens d'engagement de palette (15, 17) respectivement, caractérisé en ce que le bras échangeur de palette (12) est construit de manière à lever et porter les palettes (P₁, P₂) en porte-à-faux lors du changement de leur position.

2. Changeur automatique de palette selon la revendication 1, caractérisé en ce qu'un (15) des moyens d'engagement de palette du bras échangeur de palette (12) est une nervure d'engagement (15) formée en un arc de cercle concentrique avec l'arbre de support (13), avec l'autre (17) moyen d'engagement de palette dudit bras étant une tige de blocage, dans lequel chaque bloc d'engagement (14) comprend une gorge arquée (27) pour recevoir la nervure d'engagement (15) et un évidement (29) pour recevoir la tige de blocage (17).

3. Changeur automatique de palette selon la revendication 1 ou 2, dans lequel les moyens d'entraînement (34-40) et les moyens d'actionnement peuvent être fonctionnellement couplés.

4. Changeur automatique de palette selon la revendication 3, dans lequel les moyens d'entraînement (34-40) et les moyens d'actionnement peuvent être fonctionnellement couplés via un système hydraulique (51, 52).
